# EUROPEAN PATENT APPLICATION

(11) **EP 4 456 245 A1**
(43) Date of publication of application: **30.10.2024**
(21) Application number: 22910656.2
(22) Date of filing: 11.11.2022
(51) Int. Cl.: H01M 10/058, H01M 4/131, H01M 10/0525, H01M 10/0566, H01M 10/0585, H01M 50/105, H01M 50/109, H01M 50/119, H01M 50/121, H01M 50/124, H01M 50/133, H01M 50/434, H01M 50/46

(54) **LITHIUM SECONDARY BATTERY**

(30) Priority: 24.12.2021 JP 2021210902
(71) Applicant: NGK Insulators, Ltd., Nagoya city, Aichi 467-8530 (JP)
(72) Inventor: MITSUHASHI, Takuaki, Nagoya-city, Aichi 467-8530 (JP); IIDA, Daisuke, Nagoya-city, Aichi 467-8530 (JP); NAKASHIMA, Eiji, Nagoya-city, Aichi 467-8530 (JP)
(74) Representative: Müller-Boré & Partner Patentanwälte PartG mbB
(86) International application number: PCT/JP2022/042024
(87) International publication number: WO 2023/119937

(57) **Abstract**

Provided is a lithium secondary battery, including: a positive electrode layer including a lithium composite oxide sintered body; a negative electrode layer; a separator interposed between the positive electrode layer and the negative electrode layer; an electrolytic solution impregnated into the positive electrode layer, the negative electrode layer, and the separator; and an exterior body, which has a closed space and is configured to store the positive electrode layer, the negative electrode layer, the separator, and the electrolytic solution in the closed space. This lithium secondary battery has a determination coefficient R² of 0.8 or more, which is obtained when plots of a square root of the number of days elapsed of up to 180 days and a capacity maintenance ratio (%) in a float charging test are linearly regressed.

## Description

### Technical Field

The present disclosure relates to a lithium secondary battery. This application claims priority from Japanese Patent Application No. 2021-210902, filed on December 24, 2021, the contents of which are incorporated herein by reference in their entirety.

### Background Art

As one form of a lithium secondary battery, there is known a battery including: a positive electrode layer including a sintered body of a lithium composite oxide; a negative electrode layer including a titanium-containing sintered body; a ceramic separator arranged between the positive electrode layer and the negative electrode layer; and an electrolytic solution impregnated into the positive electrode layer, the negative electrode layer, and the ceramic separator. In, for example, Patent Literature 1, there is a disclosure of a coin-type lithium secondary battery including an integrated sintered plate in which a positive electrode layer, a ceramic separator, and a negative electrode layer are bonded to each other, the layers and the separator being impregnated with an electrolytic solution.

Meanwhile, it has been known that when float charging is continued in the lithium secondary battery, a reduction in capacity of the battery occurs. In, for example, Patent Literature 2, there is a disclosure that charging is performed in a power storage system on the basis of a prediction on the deterioration of the lithium secondary battery. In the system of Patent Literature 2, deterioration master data that has been acquired or calculated in advance is stored in the storage portion of the system, and the deterioration of the lithium secondary battery with time is predicted with the deterioration master data.

### Citation List

### Patent Literature

[PTL 1] WO 2019/221144 A1
[PTL 2] WO 2017/002292 A1

### Summary of Invention

### Technical Problem

Along with the expansion of the applications of the lithium secondary battery, a high-reliability lithium secondary battery that can correspond to float charging has been desired. In view of the foregoing, an object of the present invention is to provide a high-reliability lithium secondary battery that can correspond to float charging.

### Solution to Problem

According to an embodiment of the present disclosure, there is provided a lithium secondary battery, including: a positive electrode layer including a lithium composite oxide sintered body; a negative electrode layer; a separator interposed between the positive electrode layer and the negative electrode layer; an electrolytic solution impregnated into the positive electrode layer, the negative electrode layer, and the separator; and an exterior body, which has a closed space and is configured to store the positive electrode layer, the negative electrode layer, the separator, and the electrolytic solution in the closed space. This lithium secondary battery has a determination coefficient R² of 0.8 or more, which is obtained when plots of a square root of the number of days elapsed of up to 180 days and a capacity maintenance ratio (%) in a float charging test are linearly regressed.

### Advantageous Effects of Invention

According to the above-mentioned lithium secondary battery, the high-reliability lithium secondary battery that can correspond to float charging is provided.

### Brief Description of Drawings

FIG. 1 is a schematic plan view for illustrating the structure of a pouch-type lithium secondary battery.
FIG. 2 is a schematic sectional view for illustrating the structure of the pouch-type lithium secondary battery.
FIG. 3 is a schematic sectional view for illustrating the structure of a coin-type lithium secondary battery.
FIG. 4 is a schematic view for illustrating an assembly process for the pouch-type lithium secondary battery.
FIG. 5 is a graph for showing the results of a float charging test.

### Description of Embodiments

### [Outline of Embodiments]

First, embodiments of the present disclosure are listed and described. A lithium secondary battery according to the present disclosure includes: a positive electrode layer including a lithium composite oxide sintered body; a negative electrode layer; a separator interposed between the positive electrode layer and the negative electrode layer; an electrolytic solution impregnated into the positive electrode layer, the negative electrode layer, and the separator; and an exterior body, which has a closed space and is configured to store the positive electrode layer, the negative electrode layer, the separator, and the electrolytic solution in the closed space. This lithium secondary battery has a determination coefficient R² of 0.8 or more, which is obtained when plots of a square root of the number of days elapsed of up to 180 days and a capacity maintenance ratio (%) in a float charging test are linearly regressed.

Hitherto, as one form of a lithium secondary battery, there has been known a battery including: a positive electrode layer including a sintered body of a lithium composite oxide; a negative electrode layer including a titanium-containing sintered body; a ceramic separator arranged between the positive electrode layer and the negative electrode layer; and an electrolytic solution impregnated into the positive electrode layer, the negative electrode layer, and the ceramic separator (for example, Patent Literature 1). In Patent Literature 1, there is a disclosure that when the ceramic separator has a specific configuration, a lithium secondary battery, which is excellent in discharge capacity and charge-discharge cycle characteristic despite its small size, and can be produced in high yield, is achieved.

Meanwhile, it has been known that when float charging is performed in the lithium secondary battery over a long time period, the capacity of the battery reduces. In, for example, Patent Literature 2, there is a disclosure that a reduction in battery capacity in accordance with the float charging is predicted, and charging conditions are changed on the basis of the prediction.

In the system of Patent Literature 2, the reduction in battery capacity in accordance with the float charging is predicted on the basis of deterioration master data based on a root law. In Patent Literature 2, the deterioration master data is produced over the lapse of a time period as long as from 1,000 days to 5,000 days. However, the deterioration master data is not based on a measured value. In addition, the system of Patent Literature 2 is intended for a large-capacity storage battery to be used in applications, such as a power generator, a house, and a vehicle.

Of the lithium secondary batteries, a small battery, such as a coin-type or pouch-type battery, is suitable for a small instrument that can be carried under the state of being unconnected to a charging device, and hence an investigation on its float charging resistance has not been advanced. In addition, an electrode in the small battery is extremely small, and the amount of a lithium compound for forming the electrode is also small. Accordingly, it has been conceived that it is difficult to improve the resistance to float charging. However, along with the expansion of the applications of the lithium secondary batteries, there is a situation in which a high-reliability battery having excellent float charging resistance while being a small lithium secondary battery is required. Investigations have been made under the situation to find that when the float charging is continuously performed in a small lithium secondary battery, the battery may suddenly deteriorate without following the root law (the phenomenon is referred to as "specific deterioration"). In addition, investigations have been further made on the phenomenon to find that a determination coefficient R² when the plots of the square root of the number of days elapsed of up to 180 days and a capacity maintenance ratio (%) in a float charging test are linearly regressed may be used as an indication of the float charging resistance, and that when the value is 0.8 or more, a high-reliability lithium secondary battery that can correspond to the float charging is obtained.

Without being bound to any particular theory, the following lithium secondary battery has high reliability as a lithium secondary battery to be built in a small electronic instrument, such as a smart card or a wearable terminal, and an instrument inconvenience due to the deterioration of the battery hardly occurs: the determination coefficient R² of the plots when the plots of the square root of the number of days elapsed of up to 180 days and a capacity maintenance ratio (%) in a float charging test are linearly regressed is 0.8 or more. In addition, it has been conceived that the accuracy with which the deterioration of the battery is predicted is high, and hence high reliability is obtained.

The lithium secondary battery may be a pouch-type battery in which the exterior body is a laminated film including a resin film and metal foil, and which has a thickness of 0.5 mm or less. According to such configuration, there is obtained a lithium secondary battery, which has a small size and is hence excellent in general-purpose property, and is excellent in float charging resistance and hence has high reliability.

In addition, the lithium secondary battery may be a coin-type battery in which the exterior body is a metal can including a positive electrode can and a negative electrode can, and the exterior body has a diameter of 25 mm or less and a thickness of 2 mm or less. According to such configuration, there is obtained a lithium secondary battery, which has a small size and is hence excellent in general-purpose property, and is excellent in float charging resistance and hence has high reliability.

In the lithium secondary battery, the capacity maintenance ratio (%) in the float charging test, which represents a discharge capacity at the time of the lapse of 180 days with respect to a discharge capacity at the time of the start of the test, may be 35% or more. According to the configuration, the following lithium secondary battery is provided: the accuracy with which a reduction in capacity of the battery is predicted is high, and the deterioration of the battery is suppressed.

In the lithium secondary battery, the negative electrode layer may include a titanium-containing sintered body. In the lithium secondary battery having such configuration, an electrode can be formed without use of any binder. Thus, there is provided a lithium secondary battery, which has the above-mentioned effects, has a large capacity despite its small size, and has a low resistance.

In the lithium secondary battery, the separator may be a ceramic separator, and the positive electrode layer, the negative electrode layer, and the separator may serve as one integrated sintered body as a whole. The lithium secondary battery including such integrated sintered electrode has a large capacity despite its small size, and has a low resistance. In particular, the battery has high resistance to float charging.

In the lithium secondary battery, the positive electrode layer may have a specific surface area of 1.9 m²/g or less. When the specific surface area of the positive electrode layer is 1.9 m²/g or less, the resistance of the battery to float charging is further improved. When the specific surface area of the positive electrode layer falls within the range, it is conceived that such effects as described below are obtained: the decomposition reaction of an electrolytic solution is suppressed to improve the storage characteristic thereof; and the strength of an electrode plate is improved.

### [Specific Examples of Embodiments]

Next, a specific embodiment of the lithium secondary battery according to the present disclosure is described with reference to the drawings. In the following drawings, the same or corresponding portions are given the same reference symbol, and hence their description is not repeated.

### (Form 1 of Lithium Secondary Battery: Pouch-type Lithium Secondary Battery)

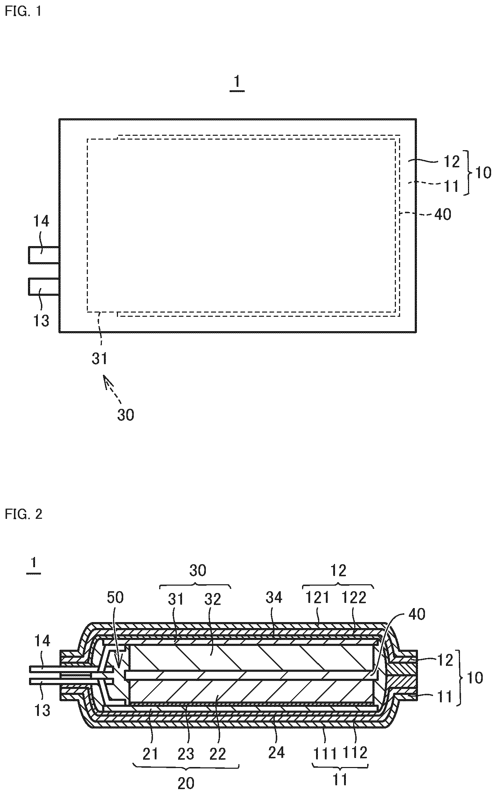

Although the form of the lithium secondary battery according to the present disclosure is not limited, the battery is preferably, for example, a small pouch-type battery or coin-type battery. FIG. 1 is a schematic plan view for illustrating the structure of a pouch-type lithium secondary battery according to the present disclosure. FIG. 2 is a schematic sectional view for illustrating the structure of the pouch-type lithium secondary battery according to the present disclosure. For ease of understanding, part of an actual configuration is illustrated in an enlarged or emphasized manner, or is omitted in each of FIG. 1 and FIG. 2. The configuration illustrated in each of FIG. 1 and FIG. 2 does not necessarily reflect actual dimensions.

With reference to FIG. 1, a battery 1 that is a lithium secondary battery includes: a pair of exterior films 11 and 12 for forming an exterior body 10; a positive electrode tab terminal 13; and a negative electrode tab terminal 14. The exterior films 11 and 12 have the same rectangular shape in plan view (i.e., under a state illustrated in FIG. 1). Peripheral edges on the four sides of the exterior film 11 and those on the four sides of the exterior film 12 are joined to each other except portions facing each other across the positive electrode tab terminal 13 and the negative electrode tab terminal 14. Although a specific mode of the joining is not particularly limited, the joining may be performed by, for example, bonding or fusion.

The battery 1 is a small and thin battery. Although the dimensions of the battery 1 (the external dimensions of the exterior body 10) are not particularly limited, the battery may have, for example, a longitudinal-direction length of from 10 mm to 46 mm and a transverse-direction length of from 10 mm to 46 mm. The thickness of the battery 1 (the external thickness of the exterior body 10) may be 0.5 mm or less, and may be, for example, from 0.3 mm to 0.45 mm, preferably from 0.4 mm to 0.45 mm. The entirety of the battery 1 is a sheet-like article or a plate-like article having flexibility. The battery 1 is a thin and small battery.

With reference to FIG. 2, in the battery 1, an internal space is formed between the inner surfaces of the exterior films 11 and 12 facing each other. The battery 1 includes: a positive electrode 20; a negative electrode 30; a separator 40; an electrolytic solution 50; the exterior body 10; the positive electrode tab terminal 13; and the negative electrode tab terminal 14. In the battery 1, the positive electrode 20, the negative electrode 30, the separator 40, and the electrolytic solution 50 may be collectively referred to as "battery main body." The positive electrode 20, the negative electrode 30, and the separator 40 are superimposed on each other in a predetermined superimposing direction. In the example illustrated in FIG. 2, the positive electrode 20, the separator 40, and the negative electrode 30 are laminated in a vertical direction in the figure. That is, the positive electrode 20 and the negative electrode 30 face each other through the separator 40. In the following description, an upper side and a lower side in FIG. 2 are referred to as "upper side" and "lower side" in the battery 1, respectively. In addition, the vertical direction in FIG. 2 is referred to as "vertical direction" or "lamination direction." Such appellation of the direction is merely used for description herein, and an arrangement direction in an actual use mode is not limited thereto.

The exterior body 10 is a bag body obtained by joining the peripheral edges of the exterior films 11 and 12 to each other. The exterior films 11 and 12 are each formed from, for example, a laminated sheet in which metal foil 111 or 121 formed from a metal such as aluminum (Al) and an insulating resin layer 112 or 122 are laminated. In each of the exterior films 11 and 12, the metal foil 111 or 121 and the resin layer 112 or 122 are arranged so as to be positioned outside the bag body and inside the bag body, respectively.

With reference to FIG. 1 and FIG. 2, the exterior body 10 covers the entirety of the battery main body. The exterior body 10 is a bag body, and stores the positive electrode 20, the negative electrode 30, the separator 40, and the electrolytic solution 50 therein. The electrolytic solution 50 is continuously present around the positive electrode 20, the separator 40, and the negative electrode 30. The electrolytic solution 50 is impregnated into the positive electrode 20, the separator 40, and the negative electrode 30. The positive electrode tab terminal 13 and the negative electrode tab terminal 14 each extend from the inside of the exterior body 10 to the outside thereof. In the exterior body 10, the positive electrode tab terminal 13 is connected to a positive electrode collector 21. With the configuration, the positive electrode tab terminal 13 is electrically connected to the positive electrode 20. The negative electrode tab terminal 14 is connected to a negative electrode collector 31. With the configuration, the negative electrode tab terminal 14 is electrically connected to the negative electrode 30.

The positive electrode tab terminal 13 and the negative electrode tab terminal 14 each have a belt shape. The positive electrode tab terminal 13 includes: a main body portion made of a conductor; and a resin-made protective layer arranged so as to cover the surface of the main body portion. The negative electrode tab terminal 14 similarly includes: a main body portion made of a conductor; and a resin-made protective layer arranged so as to cover the surface of the main body portion. A metal, such as aluminum (Al) or nickel (Ni), may be adopted as the conductor for forming each of the main body portions.

With reference to FIG. 2, the separator 40 is arranged on the upper surface of the positive electrode 20. The negative electrode 30 is arranged on the upper surface of the separator 40. That is, the negative electrode 30 is arranged so as to be brought into contact with the upper surface side of the separator 40, and the positive electrode 20 is arranged so as to be brought into contact with the lower surface side of the separator 40. The positive electrode 20, the negative electrode 30, and the separator 40 each have, for example, a rectangular shape in plan view. The positive electrode 20 and the negative electrode 30 are substantially identical in shape and dimensions to each other in plan view. The separator 40 may have dimensions larger than those of the positive electrode 20 and the negative electrode 30 for the purpose of preventing an internal short circuit. Substantially the entireties of the positive electrode 20 and the negative electrode 30 face each other except for a shift occurring in a production process for, or during the use of, the battery.

With regard to the dimensions and shape of the positive electrode 20 in plan view (i.e., the dimensions and shape of the main surface of the positive electrode 20), the plan-view shape may be, for example, a rectangle in which a side has a length of from 9.75 mm to 28.5 mm. The plan-view shape may be preferably a rectangle in which a side has a length of from 18.15 mm to 25.5 mm. The area of the positive electrode 20 in plan view (i.e., the area of the main surface of the positive electrode 20) may be, for example, from 95 mm² to 812 mm², and may be preferably from 441 mm² to 812 mm².

The dimensions, shape, and area of the negative electrode 30 may be the same as those of the positive electrode 20. In addition, the negative electrode 30 may be slightly larger than the positive electrode 20 (by from about 4% to about 7%). That is, with regard to the dimensions and shape of the negative electrode 30 in plan view (i.e., the dimensions and shape of the main surface of the negative electrode 30), the plan-view shape may be, for example, a rectangle in which a side has a length of from 9.12 mm to 29.2 mm. The plan-view shape may be preferably a rectangle in which a side has a length of from 17.52 mm to 26.15 mm. The area of the negative electrode 30 in plan view (i.e., the area of the main surface of the negative electrode 30) may be, for example, from 109 mm² to 852 mm², and may be preferably from 470 mm² to 852 mm². In addition, when the negative electrode is formed by using a sintered body plate of LTO, the negative electrode may be smaller than the positive electrode.

### (Structure of Positive Electrode)

With reference to FIG. 2, the positive electrode 20 includes the positive electrode collector 21, a positive electrode active material plate 22, and a conductive joining layer 23. The positive electrode collector 21 is a sheet-like member having conductivity. The lower surface of the positive electrode collector 21 is joined to the resin layer 121 of the exterior film 11 through a positive electrode joining layer 24. The positive electrode joining layer 24 is formed from, for example, a mixed resin of an acid-modified polyolefin-based resin and an epoxy-based resin. The positive electrode joining layer 24 may be formed from any other material. The thickness of the positive electrode joining layer 24 is, for example, from 0.5 um to 10 µm.

The positive electrode collector 21 includes: metal foil formed from a metal such as aluminum; and a conductive carbon layer laminated on the upper surface of the metal foil. In other words, the main surface of the positive electrode collector 21 facing the positive electrode active material plate 22 is covered with the conductive carbon layer. The metal foil may be formed from any one of various metals except aluminum (e.g., copper, nickel, silver, gold, chromium, iron, tin, lead, tungsten, molybdenum, titanium, zinc, or alloys containing those metals). In addition, the positive electrode collector 21 may not include the conductive carbon layer.

The positive electrode active material plate 22 is a thin plate-like ceramic sintered body containing a lithium composite oxide. It is preferred that the positive electrode active material plate 22 be formed substantially only of the lithium composite oxide. The separator 40 is laminated on the upper surface of the positive electrode active material plate 22. Gold (Au) or the like may be sputtered as a collector aid on the positive electrode active material plate 22.

The positive electrode active material plate 22 preferably has a structure in which a plurality of (i.e., many) primary particles are bonded to each other. The primary particles each include a lithium composite oxide having a layered rock-salt structure. The lithium composite oxide is obtained by substituting part of a composite oxide of lithium and a transition metal element M (general formula: LiₚMO₂ (where 0.05<p<1.10)) with a substitution metal element that is any other metal element. The transition metal element M contains, for example, one or more kinds selected from cobalt (Co), nickel (Ni), and manganese (Mn). The transition metal element M is a main metal out of the metals except lithium in the lithium composite oxide, and is hereinafter referred to as "main transition metal element."

Examples of the composite oxide of lithium and the transition metal element M include a lithium cobalt oxide (LiₚCoO₂ (where 1≤p≤1.1), lithium nickel oxide (LiNiO₂), lithium manganese oxide (Li₂MnO₃), a lithium nickel manganese oxide (Liₚ(Ni_{0.5},Mn_{0.5})O₂), a solid solution represented by the general formula: Liₚ(Coₓ,Ni_{y},Mn_{z})O₂ (where 0.97≤p≤1.07, x+y+z=1), a solid solution represented by Liₚ(Coₓ,Ni_{y},Al_{z})O₂ (where 0.97≤p≤1.07, x+y+z=1, 0<x≤0.25, 0.6≤y≤0.9, and 0<z≤0.1), and a solid solution of Li₂MnO₃ and LiMO₂ (where M represents a transition metal, such as Co or Ni). The lithium composite oxide is particularly preferably a lithium cobalt oxide LiₚCoO₂ (where 1≤p≤1.1), and an example thereof is LiCoO₂ (sometimes referred to as "LCO").

The transition metal element M may be one or more kinds of elements, such as magnesium (Mg), aluminum (Al), silicon (Si), calcium (Ca), titanium (Ti), vanadium (V), chromium (Cr), iron (Fe), copper (Cu), zinc (Zn), gallium (Ga), germanium (Ge), strontium (Sr), yttrium (Y), zirconia (Zr), niobium (Nb), molybdenum (Mo), silver (Ag), tin (Sn), antimony (Sb), tellurium (Te), barium (Ba), and bismuth (Bi). Titanium (Ti) or niobium (Nb) is preferred.

The layered rock-salt structure is a crystal structure in which a lithium layer and a transition metal layer formed of a metal except lithium are alternately laminated while an oxygen layer is interposed therebetween. That is, the layered rock-salt structure is a crystal structure in which a metal ion layer formed of a metal except lithium and a layer formed only of lithium are alternately laminated through an oxide ion. The structure is typically an α-NaFeO₂-type structure, that is, a structure in which the transition metal and lithium are regularly arrayed in the [111] axis direction of a cubic rock-salt-type structure.

The thickness of the positive electrode collector 21 is, for example, from 9 um to 50 µm, preferably from 9 um to 20 µm, more preferably from 9 um to 15 um. The thickness of the positive electrode active material plate 22 is, for example, from 15 um to 200 µm, preferably from 30 um to 150 µm, more preferably from 50 um to 100 um. When the conductive joining layer 23 is present between the positive electrode collector 21 and the positive electrode active material plate 22, the thickness of the conductive joining layer 23 is, for example, from 3 um to 28 µm, preferably from 5 um to 25 µm.

### (Negative Electrode Structure 1)

With reference to FIG. 2, the negative electrode 30 includes the negative electrode collector 31 and a negative electrode active material layer 32. The negative electrode collector 31 is a sheet-like member having conductivity. The upper surface of the negative electrode collector 31 is joined to the resin layer 122 of the exterior film 12 through a negative electrode joining layer 34. The negative electrode active material layer 32 is applied to the lower surface of the negative electrode collector 31. That is, the negative electrode 53 is a so-called applied electrode. The negative electrode active material layer 32 faces the separator 40.

The negative electrode joining layer 34 is formed from, for example, a mixed resin of an acid-modified polyolefin-based resin and an epoxy-based resin. The negative electrode joining layer 34 may be formed from any one of other various materials.

The negative electrode collector 31 is, for example, metal foil formed from a metal such as copper. The metal foil may be formed from any one of various metals except copper (e.g., copper, stainless steel, nickel, aluminum, silver, gold, chromium, iron, tin, lead, tungsten, molybdenum, titanium, zinc, or alloys containing those metals).

The negative electrode active material layer 32 includes a binder containing a resin as a main component, and a carbon material serving as a negative electrode active material. Examples of the carbon material include natural graphite, artificial graphite, pyrolytic carbon, coke, a resin fired body, mesophase spherules, and mesophase pitch. In the negative electrode 30, a lithium-absorbing material may be utilized as the negative electrode active material instead of a carbonaceous material. Examples of the lithium-absorbing material include silicon, aluminum, tin, iron, iridium, and alloys, oxides, or fluorides containing those metals. For example, a styrenebutadiene rubber (SBR), polyvinylidene fluoride (PVDF), or a mixture thereof may be used as the binder.

The thickness of the negative electrode collector 31 is, for example, from 5 um to 25 µm, preferably from 8 um to 20 µm, more preferably from 8 um to 15 um. The thickness of the negative electrode active material layer 32 is, for example, from 20 um to 300 µm, preferably from 30 um to 250 µm, more preferably from 30 um to 150 um. When the thickness of the negative electrode active material layer 32 is increased, an active material volume per unit area is increased, and hence the energy density of the battery 1 can be increased. When the thickness of the negative electrode active material layer 32 is reduced, the deterioration of battery characteristics (in particular, an increase in resistance value) along with the repetition of charging and discharging can be suppressed.

### (Negative Electrode Structure 2)

In the lithium secondary battery according to the present disclosure, the negative electrode is not limited to the applied electrode. The negative electrode may be formed by using a sintered body plate of lithium titanium oxide Li₄Ti₅O₁₂ (hereinafter sometimes referred to as "LTO") as a configuration corresponding to the negative electrode active material layer 32. The LTO sintered body plate has a structure in which a plurality of (i.e., many) primary particles are bonded to each other. Those primary particles each include LTO. Although it has been known that LTO typically has a spinel structure, LTO may have any other structure at the time of the charging and discharging of the lithium secondary battery. For example, in LTO, a reaction advances at the time of the charging and the discharging under a state in which two phases, that is, Li₄Ti₅O₁₂ (spinel structure) and Li₇Ti₅O₁₂ (rock-salt structure) coexist. Accordingly, the structure of LTO is not limited to the spinel structure.

The primary particle diameter that is the average particle diameter of the plurality of primary particles for forming the LTO sintered body plate may be 1.2 um or less. The primary particle diameter is preferably from 0.02 um to 1.2 um, more preferably from 0.05 um to 0.7 um. The thickness of the LTO sintered body plate may be from 10 um to 290 um. The thickness is preferably from 10 um to 200 µm, more preferably from 40 um to 200 µm, still more preferably from 40 um to 175 µm, particularly preferably from 50 um to 160 um. As the LTO sintered body plate becomes thicker, it becomes easier to achieve a battery having a high capacity and a high energy density.

The LTO sintered body plate includes pores. When the LTO sintered body plate includes the pores, in particular, open pores, the incorporation of the LTO sintered body plate as a negative electrode plate into the battery facilitates the permeation of the electrolytic solution into the LTO sintered body plate. As a result, lithium ion conductivity can be improved. The porosity of the LTO sintered body plate is, for example, preferably from 21% to 45%, more preferably from 22% to 40%, still more preferably from 25% to 35%. When the porosity falls within such ranges, both of the lithium ion conductivity and electronic conductivity are easily achieved. In addition, in the LTO sintered body plate, an open pore ratio, which is a ratio of the open pores to the entirety of the pores, may be preferably 60% or more. The ratio is more preferably 65% or more, still more preferably 70% or more, particularly preferably 80% or more. The open pore ratio may be 100%. As the number of the open pores increases, it becomes easier to cause the electrolytic solution to sufficiently permeate into the sintered body plate, and hence the lithium ion conductivity is improved.

### (Separator)

The separator 40 is a sheet-like or thin plate-like insulating member. The separator 40 is, for example, a single-layer separator formed from a resin. For example, polyimide, polyester (e.g., polyethylene terephthalate (PET)), or cellulose may be used as the resin. The thickness of the separator 40 is, for example, 15 um or more, preferably 18 um or more, more preferably 20 um or more. In addition, the thickness of the separator 40 is, for example, 31 um or less, preferably 28 um or less, more preferably 26 um or less. When the thickness of the separator is increased, even in the case where a lithium dendrite (dendritic crystal of lithium) is precipitated, a short circuit between the positive electrode and the negative electrode of the battery due to the lithium dendrite can be prevented. In addition, a reduction in thickness of the separator facilitates the permeation of the electrolytic solution and a lithium ion, and hence can reduce the internal resistance of the battery 1.

The structure of the separator 40 may be changed to a known structure in addition to that described above. For example, a ceramic separator may be used as the separator. When a ceramic is used, a mode in which two or three or more layers of the ceramic and the resin are laminated is permitted. A fine porous membrane formed only of the ceramic is also permitted. The ceramic is, for example, at least one kind selected from MgO, Al₂O₃, ZrO, SiC, Si₃N₄, AlN, and cordierite, and is preferably at least one kind selected from MgO, Al₂O₃, and ZrO₂.

### (Electrolytic Solution)

The electrolytic solution 50 is a liquid obtained by adding an electrolyte and an additive to a solvent. For example, lithium hexafluorophosphate (LiPF₆) may be used as the electrolyte. A LiPF₆ concentration in the electrolytic solution 50 may be, for example, from 0.5 mol/L to 2.0 mol/L, preferably from 0.75 mol/L to 1.5 mol/L, more preferably from 1.0 mol/L to 1.25 mol/L. The electrolyte may be changed and may be, for example, lithium borofluoride (LiBF₄).

The solvent of the electrolytic solution 50 is, for example, a non-aqueous solvent, such as ethylene carbonate (EC), propylene carbonate (PC), dimethyl carbonate (DMC), diethyl carbonate (DEC), ethyl methyl carbonate (EMC), γ-butyrolactone (GBL), methyl butyrate (MB), or propyl acetate (PA). For example, the solvent may be a solvent containing EC and EMC.

### (Form 2 of Lithium Secondary Battery: Coin-type Lithium Secondary Battery)

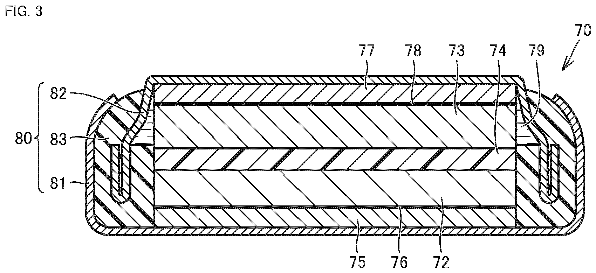

The lithium secondary battery according to the present disclosure may be a small coin-type lithium secondary battery. FIG. 3 is a schematic sectional view for illustrating the structure of a coin-type lithium secondary battery according to the present disclosure. For ease of understanding, part of an actual configuration is illustrated in an enlarged or emphasized manner, or is omitted in FIG. 3. The configuration illustrated in FIG. 3 does not necessarily reflect actual dimensions.

With reference to FIG. 3, a lithium secondary battery 70 includes: a positive electrode layer 72; a negative electrode layer 73; a separator 74; an electrolytic solution 79; and an exterior body 80. The positive electrode layer 72 includes a sintered body containing a lithium cobalt oxide. The negative electrode layer 73 includes, for example, a titanium-containing sintered body. The separator 74 is made of a ceramic, and is interposed between the positive electrode layer 72 and the negative electrode layer 73. The electrolytic solution 79 is impregnated into the positive electrode layer 72, the negative electrode layer 73, and the separator 74.

The exterior body 80 has a closed space, and stores the positive electrode layer 72, the negative electrode layer 73, the separator 74, and the electrolytic solution 79 in the closed space. The positive electrode layer 72, the separator 74, and the negative electrode layer 73 form one integrated sintered body plate as a whole. That is, the positive electrode layer 72, the separator 74, and the negative electrode layer 73 are bonded to each other. The phrase "form one integrated fired plate" as used herein means that the three layers, that is, the positive electrode layer 72, the separator 74, and the negative electrode layer 73 are connected and bonded to each other without reliance on any other bonding approach such as an adhesive. In addition, as another embodiment, the positive electrode layer 72 and the separator 74 form an integrated sintered plate, and the negative electrode layer 73 may be a sintered body formed separately from the integrated fired plate.

The exterior body 80 includes a positive electrode can 81, a negative electrode can 82, and a gasket 83. The positive electrode can 81 and the negative electrode can 82 are caulked through the gasket 83 to form the closed space. The positive electrode can 81 and the negative electrode can 82 may each be made of, for example, a metal such as stainless steel. The gasket 83 may be a circular member made of an insulating resin, such as polypropylene, polytetrafluoroethylene, or a PFA resin, and is not particularly limited. Although specific dimensions of the exterior body 80 are not particularly limited, for example, the diameter and thickness thereof are preferably 25 mm or less and 2 mm or less, respectively.

With reference to FIG. 3, the lithium secondary battery 70 includes a positive electrode collector 75 and a negative electrode collector 77. Although the positive electrode collector 75 and the negative electrode collector 77 are not particularly limited, the collectors are each preferably metal foil, such as copper foil or aluminum foil. The positive electrode collector 75 is preferably arranged between the positive electrode layer 72 and the positive electrode can 81. The negative electrode collector 77 is preferably arranged between the negative electrode layer 73 and the negative electrode can 82. In addition, a positive electrode-side carbon layer 76 is preferably arranged between the positive electrode layer 72 and the positive electrode collector 75 from the viewpoint of reducing a contact resistance therebetween. Similarly, a negative electrode-side carbon layer 78 is preferably arranged between the negative electrode layer 73 and the negative electrode collector 77 from the viewpoint of reducing a contact resistance therebetween. The positive electrode-side carbon layer 76 and the negative electrode-side carbon layer 78 each preferably include conductive carbon, and each only need to be formed by, for example, applying a conductive carbon paste through screen printing or the like.

The positive electrode layer 72 may have the same composition as that of the battery 1 described above that is a pouch-type lithium secondary battery. In addition, the thickness of the positive electrode layer 72 is preferably from 60 um to 450 µm, more preferably from 70 um to 350 µm, still more preferably from 90 um to 300 um. In addition, the porosity of the positive electrode layer 72 may be, for example, preferably from 20% to 60%. The porosity is more preferably from 25% to 55%, still more preferably from 30% to 50%, particularly preferably from 30% to 45%.

The negative electrode layer 73 may have the same composition as that of the battery 1 described above that is a pouch-type lithium secondary battery. In addition, the thickness of the negative electrode layer 73 is preferably from 70 um to 500 µm, more preferably from 85 um to 400 µm, still more preferably from 95 um to 350 µm.

The separator 74 is a ceramic-made fine porous membrane, and is hence a ceramic separator. The separator 74 is excellent in heat resistance, and hence has an advantage in that the separator can be produced as one integrated sintered body plate as a whole together with the positive electrode layer 72 and the negative electrode layer 73. The composition of a ceramic in the separator 74 may be the same as that in the separator 40 described above. The thickness of the separator 74 is preferably from 3 um to 40 um, more preferably from 5 um to 35 µm, still more preferably from 10 um to 30 um. The porosity of the separator 74 is preferably from 30% to 85%, more preferably from 40% to 80%.

The same configurations as those of the battery 1 described above or other known configurations may be used as the positive electrode collector 75, the negative electrode collector 77, and the electrolytic solution 79.

### (Float Charging Resistance of Lithium Secondary Battery)

The lithium secondary battery according to the present disclosure has a feature in that the determination coefficient R² (also referred to as "R-squared value") when the plots of the square root of the number of days elapsed of up to 180 days and the capacity maintenance ratio (%) in the float charging test are linearly regressed is 0.8 or more. The R² is preferably 0.85 or more, more preferably 0.9 or more.

Conditions for the float charging test may be determined in accordance with the configuration of, and materials for, the lithium secondary battery. For example, with regard to the temperature at which the float charging test is performed, the test is preferably performed at the use upper limit temperature of the battery to be subjected to the test. The heat resistance of a material for forming the lithium secondary battery such as the electrolytic solution serves as a guideline on the use upper limit temperature. For example, the temperature at which the thermal decomposition of the electrolytic solution does not occur even when the battery is used for a long time period (e.g., 180 days) may be defined as the heat-resistant temperature of the battery. In addition, with regard to the voltage at which the float charging test is performed, the test is preferably performed at the use upper limit voltage of the battery to be subjected to the test. The reaction potentials of materials for forming the lithium secondary battery such as materials for forming its electrodes serve as a guideline on the use upper limit voltage. The use upper limit voltage may be determined on the basis of, for example, a difference between the reaction potential of the positive electrode and the reaction potential of the negative electrode.

The time period of the float charging test may be set to 180 days. The day of the start of the test is defined as the zeroth day. The interval at which the capacity of the battery is observed during the test period may be set to an interval of, for example, from 5 days to 15 days. To calculate the R², about 10 to 30 plots are preferably present during the 180 days. In other words, the discharge capacity of the battery is desirably observed about 10 to 30 times during the period from the zeroth day to the 180th day. The square root of the number of days elapsed is used in the calculation of the R². Accordingly, the following may be performed: at the beginning of the start of the test, the interval at which the battery capacity is observed is set to be short; and as the test period elapses, the interval at which the discharge capacity is observed is set to be longer. Details about a specific test method are described in detail in Examples.

In the present disclosure, it has been found that a change in discharge capacity with time during the period of up to 180 days fluctuates without largely deviating from a root law, and particularly when the battery has an R-squared value of 0.8 or more, a lithium secondary battery, which does not specifically deteriorate and is hence excellent in stability, is obtained. Although a production method for producing a lithium secondary battery having such characteristic is not limited, a lithium secondary battery excellent in float charging resistance is obtained by, for example, appropriately setting a condition under which a LCO sintered body for forming its positive electrode layer is fired.

It has been conceived that the condition under which the LCO sintered body is fired changes the specific surface area of the LCO sintered body for forming the positive electrode. The range of the specific surface area is not limited to a specific range because the range is related to the dimensions of the entirety of the electrode and any other configuration, such as the separator or negative electrode of the battery. However, in the case of, for example, a battery using LCO as a positive electrode and LTO as a negative electrode, the specific surface area of the LCO sintered body is preferably from 1.0 m²/g to 1.9 m²/g.

### [Examples]

The lithium secondary battery of the present disclosure is described in more detail by way of Examples and Comparative Examples.

### [Example 1]

A lithium secondary battery was produced in accordance with a method described in the following sections (1) to (3). The resultant lithium secondary battery was evaluated by a method described in the section (4).

In the production of a green sheet in each of Examples and Comparative Examples below, the viscosity of a slurry was measured with an LVT viscometer manufactured by Brookfield. In addition, at the time of the molding of the slurry on a PET film, a doctor blade method was used.

### (1) Production of Positive Electrode Plate

### (1a) Production of LiCoO₂ (LCO) Green Sheet

Co₃O₄ powder (manufactured by Seido Chemical Industry Co., Ltd.) and Li₂CO₃ powder (manufactured by Honjo Chemical Corporation) weighed so that the molar ratio "Li/Co" became 1.01 were mixed, and then, the mixture was held at 780°C for 5 hours. The resultant powder was pulverized in a pot mill so that a volume-based D₅₀ particle diameter became 0.4 µm. 100 Parts by weight of the resultant LCO powder, 100 parts by weight of a dispersion medium (toluene:isopropanol=1:1), 10 parts by weight of a binder (polyvinyl butyral: product number: BM-2, manufactured by Sekisui Chemical Co., Ltd.), 4 parts by weight of a plasticizer (di(2-ethylhexyl) phthalate (DOP), manufactured by Kurogane Kasei Co., Ltd.), and 2 parts by weight of a dispersant (product name: RHEODOL SP-O30, manufactured by Kao Corporation) were mixed. The resultant mixture was stirred under reduced pressure to be defoamed, and its viscosity was adjusted to 4,000 cP. Thus, a LiCoO₂ slurry was prepared. The prepared slurry was molded into a sheet shape on the PET film. Thus, a LiCoO₂ green sheet was formed. The thickness of the LiCoO₂ green sheet after its drying was 98 um.

### (1b) Production of LiCoO₂ Sintered Body Plate

The LiCoO₂ green sheet peeled from the PET film was cut into a 50-millimeter square with a cutter, and was mounted on the center of a magnesia-made setter (dimensions: 90-millimeter square, height: 1 mm) serving as a lower setter. A porous magnesia-made setter serving as an upper setter was mounted on the LiCoO₂ sheet. The above-mentioned LiCoO₂ sheet was mounted in a 120-millimeter square alumina sheath (manufactured by Nikkato Corporation) under the state of being sandwiched between the setters. At this time, the alumina sheath was not sealed, and was lidded while a gap of 0.5 mm was arranged therein. The resultant laminated product was degreased for 3 hours by increasing its temperature to 600°C at a rate of temperature increase of 200°C/h. After that, the degreased product was fired by increasing the temperature to 920°C at 200°C/h, and then holding the product at the temperature for 4 hours. After the firing, the temperature was decreased to room temperature, and then the fired product was removed from the alumina sheath. Through those procedures, a LiCoO₂ sintered body plate having a thickness of 90 um was obtained as a positive electrode plate. The resultant positive electrode plate was cut into a rectangular shape measuring 9.75 mm by 18.15 mm with a laser processor to provide a chip-like positive electrode plate.

### (2) Production of Negative Electrode Plate

### (2a) Production of Li₄Ti₅O₁₂ (LTO) Green Sheet

First, 100 parts by weight of LTO powder (volume-based D₅₀ particle diameter: 0.06 um, manufactured by Sigma-Aldrich Japan G.K.), 100 parts by weight of a dispersion medium (toluene:isopropanol=1:1), 20 parts by weight of a binder (polyvinyl butyral: product number: BM-2, manufactured by Sekisui Chemical Co., Ltd.), 4 parts by weight of a plasticizer (di(2-ethylhexyl) phthalate (DOP), manufactured by Kurogane Kasei Co., Ltd.), and 2 parts by weight of a dispersant (product name: RHEODOL SP-O30, manufactured by Kao Corporation) were mixed. The resultant mixture of negative electrode raw materials was stirred under reduced pressure to be defoamed, and its viscosity was adjusted to 4,000 cP. Thus, a LTO slurry was prepared. The prepared slurry was molded into a sheet shape on the PET film. Thus, a LTO green sheet was formed. The thickness of the LTO green sheet after its drying was set so that the thickness thereof after its firing became 110 um.

### (2b) Firing of LTO Green Sheet

The resultant green sheet was cut into a 25-millimeter square with a box cutter, and was mounted on a zirconia-made setter subjected to embossing. The green sheet on the setter was loaded into an alumina-made sheath, and was held at 500°C for 5 hours. After that, the temperature of the sheet was increased at a rate of temperature increase of 200°C/h, and the sheet was fired at 800°C for 5 hours. A Au film (thickness: 100 nm) was formed as a collector layer on the surface of the resultant LTO sintered body plate, which had been brought into contact with the setter, by sputtering, and then the resultant was subjected to laser processing into a rectangular shape measuring 9.12 mm by 17.52 mm.

### (3) Assembly of Pouch-type Lithium Secondary Battery

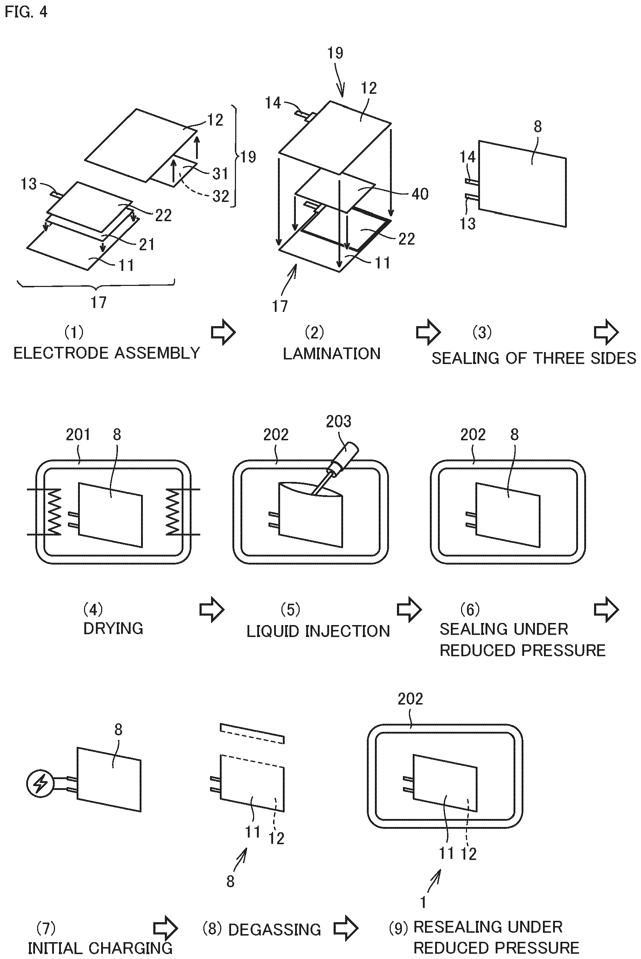

The battery 1, which was in the form of a film-covered battery schematically illustrated in FIG. 1, was produced by the following procedure. The outline of a production process is schematically illustrated in FIG. 4.

Two aluminum laminated films (manufactured by Showa Denko Packaging Co., Ltd., thickness: 61 um, three-layer structure formed of a polypropylene film, aluminum foil, and a nylon film) were prepared as the exterior films 11 and 12. As illustrated in part (1) of FIG. 4, the one positive electrode active material plate 22 was laminated on the one exterior film 11 through the positive electrode collector 21 (aluminum foil having a thickness of 9 µm) to provide a positive electrode assembly 17. At this time, the positive electrode collector 21 was fixed to the exterior film 11 with an adhesive. The positive electrode tab terminal 13 is fixed to the positive electrode collector 21 by welding so as to extend from the positive electrode collector 21. Meanwhile, a negative electrode plate 32 was laminated on the other exterior film 12 through the negative electrode collector 31 (aluminum foil having a thickness of 9 µm) to provide a negative electrode assembly 19. At this time, the negative electrode collector 31 was fixed to the exterior film 12 with the adhesive. The negative electrode tab terminal 14 is fixed to the negative electrode collector 31 by welding so as to extend from the negative electrode collector 31.

A cellulose membrane (manufactured by Nippon Kodoshi Corporation, thickness: 20 um, density: 0.47 g/cm³) was prepared as the separator 40. As illustrated in part (2) of FIG. 4, the positive electrode assembly 17, the separator 40, and the negative electrode assembly 19 were sequentially laminated so that the positive electrode active material plate 22 and the negative electrode plate 32 faced the separator 40. Thus, such a laminate 8 that both of its surfaces were covered with the exterior films 11 and 12, and the outer peripheral portions of the exterior films 11 and 12 protruded from the outer edges of its battery elements was obtained. The thickness of the battery elements (the positive electrode collector 21, the positive electrode active material plate 22, the separator 40, the negative electrode plate 32, and the negative electrode collector 31) formed in the laminate 8 was 0.33 mm. With regard to the size and shape of the battery elements, the elements were a quadrangle measuring 1.3 cm by 2.2 cm.

As illustrated in part (3) of FIG. 4, the three sides of the resultant laminate 8 were sealed. The sealing was performed by pressing the outer peripheral portion of the laminate 8 under heating at 200°C and 1.5 MPa for 15 seconds with a hitting jig (heat bar), which had been adjusted so as to provide a sealing width of 2.0 mm, to thermally fuse the exterior films 11 and 12 (aluminum laminated films) to each other in the outer peripheral portion.

As illustrated in part (4) of FIG. 4, after the sealing of the three sides, the laminate 8 was loaded into a vacuum dryer 201, followed by the removal of its moisture and the drying of the adhesive.

Subsequently, as illustrated in part (5) of FIG. 4, in a glove box 202, a gap between the exterior films 11 and 12 was formed in the remaining unsealed one side of the laminate 8 in which three sides on its outer edge had been sealed, and an injector 203 was inserted into the gap to inject the electrolytic solution 50.

As illustrated in part (6) of FIG. 4, the one side that had been unsealed was temporarily sealed with a simple sealer under a reduced-pressure atmosphere at an absolute pressure of 5 kPa. A liquid obtained as follows was used as the electrolytic solution: ethylene carbonate (EC) and γ-butyrolactone (GBL) were mixed at a volume ratio of 1:3; and LiBF₄ was dissolved in the resultant organic solvent so that its concentration became 1.5 mol/L.

As illustrated in part (7) of FIG. 4, the laminate 8 that had been temporarily sealed was initially charged, and was aged at 120°C for 1 hour.

As illustrated in part (8) of FIG. 4, after the completion of the aging, the outer peripheral portion (end portion free of any battery element) on the one side that had been finally sealed was cut off to degas the laminate.

Subsequently, as illustrated in part (9) of FIG. 4, in the glove box 202, an opened site produced by the cutting-off of the temporarily sealed portion was sealed under a reduced-pressure atmosphere at an absolute pressure of 5 kPa. The sealing was also performed by pressing the outer peripheral portion of the laminate 8 under heating at 200°C and 1.5 MPa for 15 seconds to thermally fuse the exterior films 11 and 12 to each other in the outer peripheral portion. The battery 1 in the form of a film-covered battery was produced. The battery 1 was removed from the glove box 202, and the shape of the battery 1 was adjusted by cutting off redundant sites on the outer peripheries of the exterior films 11 and 12. Thus, the battery 1, which was such a lithium secondary battery that four sides on the outer edges of the battery elements were sealed with the pair of exterior films 11 and 12, and the electrolytic solution 50 was injected, was obtained. The resultant battery 1 was a rectangle having a size measuring 27 mm by 17 mm, and had a thickness of 0.40 mm.

### (4) Evaluation

The pouch-type lithium secondary battery produced in the above-mentioned section (3) was evaluated as described below.

### (4a) Observation of Battery Capacity before Float Charging Test

A battery capacity was observed by using the resultant battery under an environment at 25°C. The observation of the battery capacity was performed by the following procedure. First, residual discharge was performed at 0.2C rate, and then constant-current charging was performed at 0.2C rate until the voltage of the battery reached 2.7 V. Subsequently, constant-voltage charging was performed until the current value of the battery became 0.02C rate. After that, discharge was performed with a constant current at 0.2C rate until the voltage reached 1.5 V. The discharge capacity was defined as a 0-day discharge capacity. After the observation of the discharge capacity, the battery was charged to 2.7 V.

### (4b) Float Charging Test

The battery whose battery capacity had been observed in the section (4a) was loaded into a thermostatic bath set to 60°C, and was connected to a DC stabilized power supply whose voltage was set to 2.7 V, followed by the performance of float charging. A voltage of 2.7 V was the use upper limit voltage of the battery, and a temperature of 60°C was the use upper limit temperature thereof.

### (4c) Observation of Battery Capacity after Floating Test

After the lapse of a predetermined number of days, the battery was removed from the thermostatic bath. The capacity of the battery after its storage for "x" (days) was observed by the same method as that in the section (4a), and a capacity maintenance ratio (%) with respect to the battery capacity before the test obtained in the section (4a) was calculated. After the performance of the capacity observation, a float test was restarted by the same method as that in the section (4b). After the lapse of a predetermined number of days, the battery was removed again, and its capacity was observed. The foregoing operation was repeated until the 180th day. The battery capacity was measured about every 15 days, and was measured after the lapse of each of 0 days, 15 days, 30 days, 45 days, ··, and 180 days.

### (4d) Calculation of Determination Coefficient R² (R-squared Value)

A graph whose axis of ordinate indicated the battery capacity maintenance ratio (%) at each number of storage days ("x" days) obtained in the section (4c) and whose axis of abscissa indicated √day was produced, and plots from the zeroth day to the 180th day were linearly regressed. An R-squared value that was the determination coefficient of the approximate straight line was calculated.

### (4e) Measurement of Specific Surface Area

The specific surface area of the LCO sintered body plate used as the positive electrode layer of the battery was measured. As pretreatment, the sample was dried under reduced pressure with a reduced-pressure heat drying device (VACUPREP 061, manufactured by Shimadzu Corporation). Subsequently, the specific surface area was measured with a specific surface area-measuring device (3 FLEX, manufactured by Shimadzu Corporation) by a multipoint method (BET method) while an inert gas was used as an introduction gas.

### [Example 2]

### (1) Production of Positive Electrode Plate

### (1a) Production of LCO Green Sheet

A LCO green sheet was produced in the same manner as in Example 1.

### (1b) Production of LCO Sintered Body

A LCO sintered body was obtained in the same manner as in Example 1 except that in the firing, the time period for which the degreased product was held at 920°C was set to 1 hour.

### (2) Production of Lithium Secondary Battery

A positive electrode assembly was produced in the same manner as in Example 1 except that the LCO obtained in the section (1) was used.

A negative electrode layer (carbon layer having a thickness of 125 um, density: 1.4 g/cm³) was laminated on the other exterior film through a negative electrode collector (copper foil having a thickness of 10 µm) to provide a negative electrode assembly. At this time, the negative electrode collector was fixed to the exterior film with an adhesive. A negative electrode terminal was fixed to the negative electrode collector by welding so as to extend from the negative electrode collector. In addition, an applied film containing the mixture of graphite serving as an active material and polyvinylidene fluoride (PVDF) serving as a binder was used as the carbon layer serving as the negative electrode layer.

A porous polypropylene membrane (manufactured by Polypore International, Inc., thickness: 25 um, porosity: 55%) was prepared as a separator. The positive electrode assembly, the separator, and the negative electrode assembly were sequentially laminated so that the positive electrode plate and the negative electrode layer faced the separator. Thus, such a laminate that both of its surfaces were covered with the exterior films and the outer peripheral portions of the exterior films protruded from the outer edges of its battery elements was obtained. The thickness of the battery elements (the positive electrode collector, the positive electrode plate, the separator, the negative electrode layer, and the negative electrode collector) formed in the laminate was 0.33 mm. With regard to the shape and size of the battery elements, the elements were a quadrangle measuring 2.3 cm by 3.2 cm.

The sealing of the laminate was performed in the same manner as in Example 1. The injection of an electrolytic solution and the temporary sealing of the laminate were also performed in the same manner as in Example 1. However, a solution obtained as follows was used as the electrolytic solution: LiPF₆ was dissolved in a mixed solvent containing ethylene carbonate (EC) and methyl ethyl carbonate (MEC) at 3:7 (volume ratio) so that its concentration became 1.0 mol/L; and vinylene carbonate (VC) was dissolved therein so that its concentration became 2 wt%. The laminate that had been temporarily sealed was initially charged, and was aged for 7 days. After the completion of the aging, the outer peripheral portion (end portion free of any battery element) on the side that had been finally sealed was cut off to degas the laminate.

After the degassing, the exterior films were sealed again in the same manner as in Example 1 to provide a lithium secondary battery. The resultant lithium secondary battery was a rectangle having a size measuring 38 mm by 28 mm, and had a thickness of 0.40 mm.

### (3) Evaluation

A float charging test was performed on the pouch-type lithium secondary battery produced in the above-mentioned section (2) by the same method except that: the charging voltage in each of the sections (4a) and (4b) of Example 1 was set to 4.2 V; and the test temperature in the section (4b) thereof was set to 45°C. In addition, the specific surface area of the LCO sintered body plate used as the positive electrode layer of the battery was measured. A voltage of 4.2 V was the use upper limit voltage of the battery, and a test temperature of 45°C was the use upper limit temperature thereof.

### [Example 3]

A LCO sintered body was obtained in the same manner as in Example 2 except that in the firing of the LCO sintered plate, the time period for which the degreased product was held at 920°C was set to 4 hours. The other process was performed in the same manner as in Example 2 to provide a lithium secondary battery.

The battery was evaluated in the same manner as in Example 2.

### [Example 4]

### (1) Production of LCO Green Sheet

A LCO green sheet was produced in the same manner as in Example 1 except that the mixing ratios of the LCO powder and the other components, and the thickness of the sheet were set as described below.

That is, 100 parts by weight of the resultant LCO powder, 100 parts by weight of a dispersion medium (toluene:isopropanol=1:1), 8 parts by weight of a binder (polyvinyl butyral: product number: BM-2, manufactured by Sekisui Chemical Co., Ltd.), 2 parts by weight of a plasticizer (di(2-ethylhexyl) phthalate (DOP), manufactured by Kurogane Kasei Co., Ltd.), and 4.5 parts by weight of a dispersant (product name: RHEODOL SP-O30, manufactured by Kao Corporation) were mixed.

In addition, the LCO green sheet was formed so as to have a thickness of 280 um after its firing.

### (2) Production of LTO Green Sheet

A LTO green sheet was produced in the same manner as in Example 1 except that the thickness of the LTO green sheet after its drying was set so that the thickness thereof after its firing became 200 um.

### (3) Production of MgO Green Sheet (Separator Green Sheet)

Magnesium carbonate powder (manufactured by Konoshima Chemical Co., Ltd.) was thermally treated at 900°C for 5 hours to provide MgO powder. The resultant MgO powder and a glass frit (manufactured by Nippon Frit Co., Ltd., CK0199) were mixed at a weight ratio of 4:1. 100 Parts by weight of the resultant mixed powder (volume-based D₅₀ particle diameter: 0.4 um), 100 parts by weight of a dispersion medium (toluene:isopropanol=1:1), 20 parts by weight of a binder (polyvinyl butyral: product number: BM-2, manufactured by Sekisui Chemical Co., Ltd.), 4 parts by weight of a plasticizer (di(2-ethylhexyl) phthalate (DOP), manufactured by Kurogane Kasei Co., Ltd.), and 2 parts by weight of a dispersant (product name: RHEODOL SP-O30, manufactured by Kao Corporation) were mixed. The resultant raw material mixture was stirred under reduced pressure to be defoamed, and its viscosity was adjusted to 4,000 cP. Thus, a slurry was prepared. The viscosity was measured with an LVT-type viscometer manufactured by Brookfield. The slurry thus prepared was molded into a sheet shape on a PET film by a doctor blade method to form a separator green sheet. The thickness of the separator green sheet was set so that the thickness thereof after its firing became 25 um.

### (4) Lamination, Pressure Bonding, and Firing

The LCO green sheet, the MgO green sheet, and the LTO green sheet were sequentially stacked. The resultant laminate was pressed at 200 kgf/cm² by a cold isostatic pressing method (CIP) so that the green sheets were pressure-bonded to each other. The laminate in which the sheets had thus been pressure-bonded was punched into a disc shape having a diameter of 10 mm with a punching die. The resultant disc-like laminate was degreased at 600°C for 5 hours. After that, the degreased product was fired by increasing its temperature to 800°C at 1,000°C/h, and holding the product at the temperature for 4 hours. After that, the fired product was cooled. Thus, one integrated sintered body plate including the following three layers was obtained: a positive electrode layer (LCO sintered body layer), a ceramic separator (MgO separator), and a negative electrode layer (LTO sintered body layer).

### (5) Production of Coin-type Lithium Secondary Battery

### (5a) Bonding of Negative Electrode Layer and Negative Electrode Collector with Conductive Carbon Paste

Acetylene black and polyimide amide were weighed at a mass ratio of 3:1, and were mixed with an appropriate amount of N-methyl-2-pyrrolidone (NMP) serving as a solvent to prepare a conductive carbon paste as a conductive adhesive. The conductive carbon paste was screen-printed onto aluminum foil serving as a negative electrode collector. The integrated sintered body produced in the above-mentioned section (4) was mounted so that its negative electrode layer fell within the undried printed pattern (i.e., the region having applied thereto the conductive carbon paste), followed by vacuum drying at 60°C for 30 minutes. Thus, a structural body in which the negative electrode layer and the negative electrode collector were bonded to each other via the negative electrode-side carbon layer was produced. The thickness of the negative electrode-side carbon layer was set to 10 µm.

### (5b) Preparation of Positive Electrode Collector with Carbon Layer

Acetylene black and polyimide amide were weighed at a mass ratio of 3:1, and were mixed with an appropriate amount of N-methyl-2-pyrrolidone (NMP) serving as a solvent to prepare a conductive carbon paste. The conductive carbon paste was screen-printed onto aluminum foil serving as a positive electrode collector, and was then dried in a vacuum at 60°C for 30 minutes to produce a positive electrode collector having formed on its surface a positive electrode-side carbon layer. The thickness of the positive electrode-side carbon layer was set to 5 µm.

### (5c) Assembly of Coin-type Lithium Secondary Battery

The positive electrode collector, the positive electrode-side carbon layer, the integrated sintered body plate (the LCO positive electrode layer, the MgO separator, and the LTO negative electrode layer), the negative electrode-side carbon layer, and the negative electrode collector were stored between a positive electrode can and a negative electrode can, which were intended to form a battery case, so as to be laminated in the stated order in a direction from the positive electrode can to the negative electrode can, followed by the loading of an electrolytic solution. After that, the positive electrode can and the negative electrode can were caulked through a gasket to seal the case. Thus, a coin cell-type lithium secondary battery having a diameter of 12 mm and a thickness of 1.0 mm was produced. At this time, a liquid obtained as follows was used as the electrolytic solution: ethylene carbonate (EC) and γ-butyrolactone (GBL) were mixed at a volume ratio of 1:3; and LiBF₄ was dissolved in the resultant organic solvent so that its concentration became 1.5 mol/L.

### (6) Evaluation

A float charging test was performed on the coin-type lithium secondary battery produced in the section (5) by the same method except that: the C rate at the time of the capacity observation in the section (4a) of Example 1 was set to 0.02C; and the test temperature in the section (4b) thereof was set to 85°C. In addition, the specific surface area of the LCO sintered body plate used as the positive electrode layer of the battery was measured. A voltage of 2.7 V was the use upper limit voltage of the battery, and a temperature of 85°C was the use upper limit temperature thereof.

### [Comparative Example 1]

A lithium secondary battery that was an existing product was prepared, and a float test was performed thereon by the same method as that of Example 1. In addition, the specific surface area of the LCO sintered body plate used as the positive electrode layer of the battery was measured. In the lithium secondary battery, its positive electrode, negative electrode, and separator included a LCO applied electrode, a LTO applied electrode, and cellulose, respectively, and PVDF was incorporated as its binder. A voltage of 2.7 V was the use upper limit voltage of the battery, and a temperature of 60°C was the use upper limit temperature thereof.

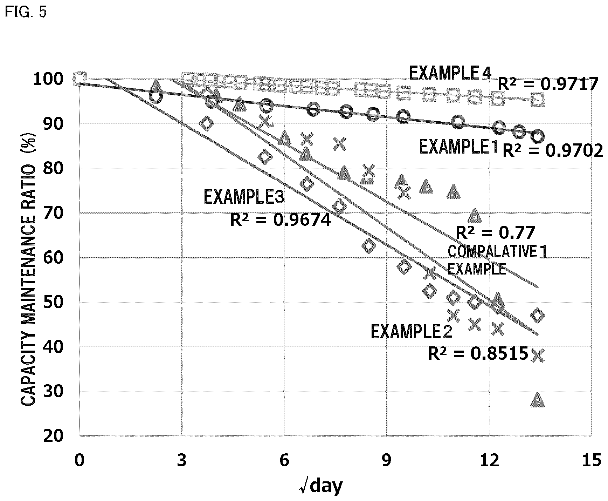

The results of the evaluations of the lithium secondary batteries of Examples 1 to 4 and Comparative Example 1 are collectively shown in Table 1. In addition, a graph for showing the results of the float charging tests of Examples 1 to 4 and Comparative Example 1 is shown in FIG. 5. In FIG. 5, the results are plotted by using the following symbols: the symbol "o (circle)" is used for Example 1; the symbol "× (cross)" is used for Example 2; the symbol "◊ (rhombus)" is used for Example 3; the symbol "□ (quadrangle)" is used for Example 4; and the symbol "Δ (triangle)" is used for Comparative Example 1.

**Table 1**

| | | | Float test | | | | |
|---|---|---|---|---|---|---|---|
| | Batter y type | Time period for which maximum temperatur e is held at the time of firing of positive electrode plate | Voltag e | Tempe ratur e | R-squared value | Capac ity maint enanc e ratio (180 days after ) | Specif ic surfac e area (m²/g) |
| Example 1 | Pouch type | 4 h | 2.7 V | 60°C | 0.97 | 87% | 1.2 |
| Example 2 | Pouch type | 1 h | 4.2 V | 45°C | 0.85 | 38% | 1.8 |
| Example 3 | Pouch type | 4 h | 4.2 V | 45°C | 0.97 | 47% | 1.2 |
| Example 4 | Coin type | 4 h | 2.7 V | 85°C | 0.97 | 95% | 1.2 |
| Comparative Example 1 | Windin g type | - | 2.7 V | 60°C | 0.77 | 28% | 2.0 |

As shown in Table 1 and FIG. 5, each of the lithium secondary batteries of Examples 1 to 4 in which the R-squared value during a time period of up to 180 days was 0.8 or more did not specifically deteriorate, and hence showed high reliability. Meanwhile, the lithium secondary battery of Comparative Example 1 having an R-squared value of less than 0.8 specifically deteriorated, and hence it was conceived that its float charging resistance was insufficient.

It is to be understood that the embodiments disclosed herein are merely examples in all respects and in no way intended to limit the present disclosure. The scope of the present disclosure is defined by the appended claims and not by the above description, and it is intended that the present disclosure encompasses all modifications made within the scope and spirit equivalent to those of the appended claims.

### Reference Signs List

1 battery, 8 laminate, 11, 12 exterior film, 13 positive electrode tab terminal, 14 negative electrode tab terminal, 17 positive electrode assembly, 19 negative electrode assembly, 20 positive electrode, 21 positive electrode collector, 22 positive electrode active material plate, 23 conductive joining layer, 24 positive electrode joining layer, 30 negative electrode, 31 negative electrode collector, 32 negative electrode active material layer, 34 negative electrode joining layer, 40 separator, 50 electrolytic solution, 53 negative electrode, 70 lithium secondary battery, 72 positive electrode layer, 73 negative electrode layer, 74 separator, 75 positive electrode collector, 76 positive electrode-side carbon layer, 77 negative electrode collector, 78 negative electrode-side carbon layer, 79 electrolytic solution, 80 exterior body, 81 positive electrode can, 82 negative electrode can, 83 gasket, 111, 121 metal foil, 112, 122 resin layer, 201 vacuum dryer, 202 glove box, 203 injector.

## Claims

1. A lithium secondary battery, comprising:
a positive electrode layer including a lithium composite oxide sintered body;
a negative electrode layer;
a separator interposed between the positive electrode layer and the negative electrode layer;
an electrolyte impregnated into the positive electrode layer, the negative electrode layer, and the separator; and
an exterior body, which has a closed space and is configured to store the positive electrode layer, the negative electrode layer, the separator, and the electrolyte in the closed space,
wherein the lithium secondary battery has a determination coefficient R² of 0.8 or more, which is obtained when plots of a square root of the number of days elapsed of up to 180 days and a capacity maintenance ratio (%) in a float charging test are linearly regressed.

2. The lithium secondary battery according to claim 1, wherein the lithium secondary battery is a pouch-type battery in which the exterior body is a laminated film including a resin film and metal foil, and which has a thickness of 0.5 mm or less.

3. The lithium secondary battery according to claim 1, wherein the lithium secondary battery is a coin-type battery in which the exterior body is a metal can including a positive electrode can and a negative electrode can, and the exterior body has a diameter of 25 mm or less and a thickness of 2 mm or less.

4. The lithium secondary battery according to any one of claims 1 to 3, wherein the capacity maintenance ratio (%) in the float charging test, which represents a battery capacity at a time of a lapse of 180 days with respect to a battery capacity at a time of a start of the test, is 35% or more.

5. The lithium secondary battery according to any one of claims 1 to 3, wherein the negative electrode layer includes a titanium-containing sintered body.

6. The lithium secondary battery according to any one of claims 1 to 3,
wherein the separator is a ceramic separator, and
wherein the positive electrode layer, the negative electrode layer, and the separator serve as one integrated sintered body as a whole.

7. The lithium secondary battery according to any one of claims 1 to 3, wherein the positive electrode layer has a specific surface area of 1.9 m²/g or less.
